# EUROPÄISCHE PATENTANMELDUNG

(11) **EP 4 401 434 A1**
(43) Veröffentlichungstag der Anmeldung: **17.07.2024**
(21) Anmeldenummer: 23211734.1
(22) Anmeldetag: 23.11.2023
(51) Int. Cl.: H04W 4/80, G07C 9/00, H04W 12/06, H04W 12/08, B60R 25/24

(54) **VERFAHREN ZUM AUTHENTIFIZIEREN EINES MOBILEN ID-GEBERS, ID-GEBER SOWIE SYSTEM**

(30) Priorität: 11.01.2023 DE 102023100511
(71) Anmelder: HUF Hülsbeck & Fürst GmbH & Co. KG, 42551 Velbert (DE)
(72) Erfinder: Ziller, Boris, 40885 Ratingen (DE); Diekers, Marco, 41466 Neuss (DE); Ette, Bernd, 38442 Wolfsburg (DE)
(74) Vertreter: Zenz Patentanwälte Partnerschaft mbB

(57) **Zusammenfassung**

Die Erfindung betrifft ein Verfahren zum Authentifizieren eines mobilen ID-Gebers (2), der eine ID-Geber-BLE-Schnittstelle (4) aufweist, an einer Zugriffs-Steuereinheit (8) mit einer Zugriffs-Steuereinheit-BLE-Schnittstelle (9) einer physischen Einheit (3),
wobei das Verfahren die nachfolgend genannten Schritte umfasst:
A) Aussenden eines Beacons (12) mit einem Beacon-Kurzidentifikator (13) in einem ersten Schritt (100);
B) Prüfen des Beacon-Kurzidentifikators (13);
C) Durchführen einer BLE-Kommunikations-Sequenz (14) mit Schritten (200, 300, 400, 500);
D) Authentifizieren des ID-Gebers (2).

Die Erfindung betrifft außerdem einen ID-Geber (2) mit Antenne (5), Mikrocontroller (6) und Sensor (7), wobei der ID-Geber (2) mit der physischen Einheit (3), ebenfalls aufweisend Antenne (10) und Steuereinrichtung (11), ein System (1) bildet.

## Beschreibung

Die Erfindung betrifft ein Verfahren zum Authentifizieren eines mobilen ID-Gebers. Die Erfindung betrifft außerdem einen ID-Geber sowie ein System, das einen ID-Geber und eine physische Einheit aufweist.

Bei vielen physischen Einheiten, wie beispielsweise Fahrzeugen, ist inzwischen etabliert, sich mit mobilen ID-Gebern an einer Zugriffs-Steuereinheit der physischen Einheit zu authentifizieren und damit das Freigeben eines Zugriffs auf die physische Einheit durch die Zugriffs-Steuereinheit herbeizuführen. Bei als Fahrzeugen ausgebildeten physischen Einheiten ist seit längerem und zunehmend der Einbau von elektronischen Schließsystemen als ein Beispiel für eine Zugriffs-Steuereinheit üblich. Aus der Praxis bekannte elektronische Schließsysteme basieren beispielsweise auf einer Verwendung von Funkschlüsseln, die mittels Funks mit dem Fahrzeug kommunizieren. Derartige Systeme sind unter verschiedenen Bezeichnungen, wie beispielsweise den Bezeichnungen *Passive-Entry*/*Passive-Start* (PEPS) und *Remote-Keyless-Entry* (RKE), seit längerem geläufig. PEPS- und RKE-Systeme basieren in manchen Ausführungen beispielsweise auf einer Kombination von niederfrequenter und hochfrequenter Funkkommunikation (in LF- und HF-Frequenzbereiche, letztere in der Regel im UHF-Bereich) zwischen einem ID-Geber mit einer zentralen Steuereinheit eines Fahrzeugs. Ein Beispiel für eine mögliche Ausführung ist das pollende Senden eines LF-Wecksignals zum Wecken eines zum LF-Empfang vorbereiteten ID-Gebers, der in Reaktion auf den Empfang des LF-Signals eine bidirektionale Funkkommunikation im HF-Frequenzbereich für den Austausch von Authentifizierungsinformationen initiiert.

Die bekannten Systeme basieren zumeist auf dem Prinzip, dass in wiederkehrenden Abständen eine Funkkommunikation durchgeführt wird, die eine erste Grobabschätzung über die Position des ID-Gebers ergeben. Beispielsweise wird bei pollenden Systemen der oben erwähnten Art kontinuierlich ein Aussenden eines LF-Wecksignals von einer stationären physischen Einheit durchgeführt, wobei infolge des Empfangs des LF-Signals durch den ID-Geber aufgrund der begrenzten Reichweite der LF-Signale implizit sichergestellt ist, dass der ID-Geber innerhalb einer zumindest grob eingrenzbaren Entfernung um die physische Einheit herum positioniert ist. Dadurch ist sichergestellt, dass die HF-Kommunikation in einer Situation gestartet wird, in welcher der ID-Geber sich in der Nähe der physischen Einheit befindet.

Auch komplexere Varianten der Positionsbestimmungen sind möglich, was insbesondere durch das Bestreben getrieben ist, eine Erhöhung des Bedienkomforts oder eine Erhöhung der Bedienungssicherheit durch präzisere Ermittlung der Position des ID-Gebers zu erreichen. Aus der Praxis bekannte Beispiele sind die Nutzung von RSSI-Werten bei Bluetooth^{®}-Kommunikation oder in der Nutzung von UWB-Ranging, das heißt: Entfernungsermittlung basierend auf einer UWB-Signallaufzeit, an die sich jeweils beispielsweise eine Trilateration anschließen kann.

Mit der Kommunikation zwischen ID-Geber und Zugriffs-Steuereinheit im Zuge eines Authentifikationsprozesses und der im Vorfeld hierfür vorgesehenen, beispielsweise zur Positionsermittlung des ID-Gebers vorgesehenen, Funkkommunikation geht unvermeidlich ein entsprechender Strombedarf einher. Vor dem Hintergrund des naturgemäß vorliegenden Wunsches nach möglichst langen Intervallen zwischen Batteriewechseln am ID-Geber einerseits und der zunehmenden Miniaturisierung der ID-Geber, wiederum einhergehend mit dem Erfordernis von Energiequellen entsprechend geringer Ausmaße, andererseits besteht der Wunsch, eine Authentifizierung eines mobilen ID-Gebers an einer Zugriffs-Steuereinheit mit möglichst geringem Strombedarf zu ermöglichen, allerdings ohne hierfür einen zu großen Verzicht auf Funktionalität in Kauf nehmen zu müssen.

Vor diesem Hintergrund liegt der Erfindung die Aufgabe zugrunde, eine Möglichkeit für das Authentifizieren eines mobilen ID-Gebers an einer Zugriffs-Steuereinheit einer physischen Einheit bereitzustellen, die mit moderatem Strombedarf im ID-Geber umsetzbar ist.

Die Aufgabe wird mit einem Verfahren zum Authentifizieren eines mobilen ID-Gebers mit den Merkmalen des Anspruchs 1 gelöst. Die Aufgabe wird ferner mit einem ID-Geber mit den Merkmalen des Anspruchs 13 sowie mit einem System aus ID-Geber und physischer Einheit mit den Merkmalen des Anspruchs 14 gelöst.

Es ist ein Verfahren zum Authentifizieren eines mobilen ID-Gebers an einer Zugriffs-Steuereinheit einer physischen Einheit vorgesehen. Die Zugriffs-Steuereinheit dient dazu, einen Zugriff auf die physische Einheit zu sperren und freizugeben, wobei die Freigabe nach einem erfolgreichen Authentifizieren erfolgt und nicht Bestandteil des beschriebenen Verfahrens ist. Ein Beispiel für die physische Einheit kann ein Fahrzeug sein, die Zugriffs-Steuereinheit des Fahrzeugs kann beispielsweise als elektronisches Schließsystems des Fahrzeugs ausgebildet sein.

Der mobile ID-Geber weist wenigstens eine ID-Geber-BLE-Schnittstelle auf und die Zugriffs-Steuereinheit weist zumindest eine Zugriffs-Steuereinheit-BLE-Schnittstelle auf.

Das Akronym BLE steht für Bluetooth-Low-Energy. Bluetooth-Low-Energy ist ein Kommunikationsprotokoll, welches in den Bluetooth^{®}-Spezifikationen mit der Versionsnummer 4.0 und neuer spezifiziert ist, beispielsweise am Prioritätstag dieser Anmeldung die Core Specification 4.2 unter der Adresse https://www.bluetooth.com/specifications/specs/core-specification-4-2/.

Der Begriff der BLE-Schnittstelle bezieht sich auf eine Gesamtheit von Komponenten, welche für eine BLE-Kommunikation gemäß Bluetooth^{®}-Spezifikation geeignet ist. Es sind also sämtliche hardware- und softwaremäßigen Voraussetzungen erfüllt, die für einen spezifikationsgemäßen Betrieb einer BLE-Kommunikation erforderlich sind. Insbesondere weist die BLE-Schnittstelle eine Antenne auf. Bei einer BLE-Schnittstelle kann es sich beispielsweise um ein Modul handeln, welches sämtliche zur BLE-Kommunikation erforderlichen Voraussetzungen erfüllt; aber auch eine Gesamtheit von miteinander gekoppelten Einzelkomponenten kann vorgesehen sein. Die ID-Geber-BLE-Schnittstelle und/oder die Zugriffs-Steuereinheit-BLE-Schnittstelle können beispielsweise als marktverfügbare Bluetooth^{®}-Module ausgebildet sein.

Das erfindungsgemäße Verfahren sieht die folgenden Schritte vor:
A) Es erfolgt ein Aussenden eines Beacons mit einem Beacon-Kurzidentifikator, der die ID-Geber-BLE-Schnittstelle kennzeichnet, von der ID-Geber-BLE-Schnittstelle aus. Das bedeutet, dass zu Beginn des Verfahrens die ID-Geber-BLE-Schnittstelle einen Beacon mit einem Beacon-Kurzidentifikator aussendet, der eine Kennzeichnung enthält, die auf die ID-Geber-BLE-Schnittstelle, und damit auf den ID-Geber, rückführbar ist. Der Beacon-Kurzidentifikator ist ein Beacon oder ein Teil eines Beacons.

Das Aussenden des Beacons mit dem Beacon-Kurzidentifikator kann beispielsweise durch vorgegebene Ereignisse ausgelöst werden, es kann aber auch beispielsweise ein kontinuierliches Aussenden in vorgegebenen Intervallen vorgesehen sein.

Der Begriff des Beacons in der hier eingeführten Weise ist als Kurzbezeichnung eines Bluetooth-Low-Energy-Beacons zu verstehen. Innerhalb des Nutzens von Bluetooth-Low-Energy im Rahmen der Bluetooth-Spezifikationen mit der Version 4.0 oder neuer hat der Begriff des Beacons sich etabliert. In Anwendungsfeldern, in denen Hardware-Transmitter einen Identifikator für den Empfang von umliegenden Empfangsgeräten aussenden, ist ein Beacon ein dem Fachmann bekannter feststehender Begriff. Anwendungsfelder, in denen die Beacons genutzt werden, sind häufig im Zusammenhang mit Lokalisation zu finden. Die Nutzung von Beacons basiert in der Regel auf vorgegebenen Protokollen, beispielsweise auf dem proprietären iBeacon^{®}-Protokoll der Firma Apple^{®} oder auf dem frei implementierbaren Eddystone^{®}-Protokoll der Firma Google^{®}. Zur Umsetzung des vorliegenden Verfahrens kann eines dieser beiden oder jedes andere verfügbare Beacon-Protokoll genutzt werden.

Wesentlich ist bei allen Anwendungen von BLE-Beacons, dass das Aussenden von Datenpaketen spezifiziert ist, die insbesondere die beiden Merkmale aufweisen, dass sie zum einen vergleichsweise klein sind (beispielsweise im Fall eines iBeacon^{®}-Datafields 31 Bytes und im Fall eines Eddystone^{®}-Beacons 255 Bytes) und zum anderen derart konfiguriert werden können, dass sie einen Kurzidentifikator enthalten. Als Kurzidentifikator kann beispielsweise ein Universally-Unique-Identifyer (UUID) vorgesehen sein, für den beispielsweise im iBeacon^{®}-Protokoll 16 Byte eingeräumt sind und der im Eddystone^{®}-Beacon als Kombination aus 10 Byte Namespace ID und 6 Byte Instance ID ausgebildet sein kann.

Die UUIDs sind den erfindungsgemäß zu nutzenden ID-Geber-BLE-Schnittstellen zugeordnet, wobei die Zuordnung beispielsweise durch den Anbieter der physischen Einheit, beispielsweise einem Fahrzeug-OEM, vor Inverkehrbringen der physischen Einheit vorgenommen worden sein kann.

In einem weiteren Schritt, nämlich Schritt B), prüft die Zugriffs-Steuereinheit den Beacon-Kurzidentifikator, nachdem die Zugriffs-Steuereinheit-BLE-Schnittstelle das Beacon empfangen hat. Wenn also der ID-Geber ausreichend nah an die Zugriffs-Steuereinheit herangekommen ist, genauer gesagt: an die Zugriffs-Steuereinheit-BLE-Schnittstelle beziehungsweise an die Antenne der Zugriffs-Steuereinheit-BLE-Schnittstelle, ist die Zugriffs-Steuereinheit-BLE-Schnittstelle in der Lage, das Beacon mit dem Beacon-Kurzidentifikator zu empfangen, woraufhin der Beacon-Kurzidentifikator von der Zugriffs-Steuereinheit geprüft wird. Dies kann beispielsweise mit einem Mikrocontroller der Zugriffs-Steuereinheit-BLE-Schnittstelle oder mit einem mit der Zugriffs-Steuereinheit-BLE-Schnittstelle gekoppelten Mikrocontroller, alternativ mit einem separaten Steuergerät, erfolgen.

C) Nachdem das Prüfen des Beacon-Kurzidentifikators ergeben hat, dass der Beacon-Kurzidentifikator eine der Zugriffs-Steuereinheit aufgrund entsprechender Konfiguration, beispielsweise durch den Hersteller, bekannte ID-Geber-BLE-Schnittstelle kennzeichnet, wird erfindungsgemäß eine BLE-Kommunikations-Sequenz zwischen Zugriffs-Steuereinheit-BLE-Schnittstelle und ID-Geber-BLE-Schnittstelle gestartet und durchgeführt. Das Durchführen der BLE-Kommunikations-Sequenz geht von der Zugriffs-Steuereinheit-BLE-Schnittstelle aus, das heißt: die Zugriffs-Steuereinheit-BLE-Schnittstelle initiiert die Durchführung der BLE-Kommunikations-Sequenz. Das bedeutet, dass eine weitergehende BLE-Kommunikation, nämlich innerhalb der BLE-Kommunikations-Sequenz, zwischen Zugriffs-Steuereinheit-BLE-Schnittstelle und ID-Geber-BLE-Schnittstelle nur unter der Voraussetzung stattfindet, dass zuvor ein Beacon-Kurzidentifikator mit einem vorgegebenen Wert empfangen worden und als solcher erkannt worden ist.

Es kann vorgesehen sein, dass auf einem mit dem für das Prüfen des Beacon-Kurzidentifikators zuständigen Mikrocontroller gekoppelten Speichermittel ein vorgegebener Beacon-Kurzidentifikator oder eine Liste aus mehreren vorgegebenen Beacon-Kurzidentifikatoren abgelegt ist, und dass die Zugriffs-Steuereinheit-BLE-Schnittstelle dahingehend ausgeführt ist, dass sie die BLE-Kommunikation-Sequenz initiiert, sobald der empfangene Beacon-Kurzidentifikator in dieser Liste enthalten ist und dies durch den im Zuge des Prüfens durchgeführten Vergleich festgestellt worden ist. Dies kann beispielsweise derart umgesetzt sein, dass der Mikrocontroller eingerichtet ist, die Zugriffs-Steuereinheit-BLE-Schnittstelle zum Initiieren der BLE-Kommunikations-Sequenz anzusteuern, nachdem der Mikrocontroller im Zuge des Prüfens des Beacon-Kurzidentifikators das Vorliegen eines vorgegebenen Beacon-Kurzidentifikators festgestellt hat.

Die BLE-Kommunikations-Sequenz zwischen Zugriffs-Steuereinheit-BLE-Schnittstelle und ID-Geber-BLE-Schnittstelle ist derart verabredet, dass im Zuge der BLE-Kommunikations-Sequenz von der ID-Geber-BLE-Schnittstelle her zu der Zugriffs-Steuereinheit-BLE-Schnittstelle hin Authentifizierungsdaten übermittelt werden, anhand derer der ID-Geber durch die Zugriffs-Steuereinheit authentifiziert wird. Beispielsweise kann vorgesehen sein, dass die ID-Geber-BLE-Schnittstelle ein Zertifikat des ID-Gebers an die Zugriffs-Steuereinheit-BLE-Schnittstelle übermittelt, und dass ein mit der Zugriffs-Steuereinheit-BLE-Schnittstelle gekoppelter Mikrocontroller die Gültigkeit des Zertifikats überprüft, beispielsweise im Fall der Nutzung eines asymmetrischen kryptographischen Verfahrens mit einem vom ID-Geber zu der Zugriffs-Steuereinheit übermittelten öffentlichen Zertifikat eines asymmetrischen Zertifikatepaars als Verifikation anhand eines privaten Zertifikats des asymmetrischen Zertifikatepaars.

Das erfindungsgemäße Verfahren beruht in besonderer Weise darauf, dass eine erste Groblokalisierung des ID-Gebers in der Nähe der physischen Einheit dadurch erfolgt, dass die physische Einheit ein Beacon mit einem Beacon-Kurzidentifikator übermittelt bekommt. Mit dem Empfang des Beacons mit dem Beacon-Kurzidentifikators ist der Zugriffs-Steuereinheit implizit die Information an die Hand gegeben, dass der ID-Geber sich innerhalb eines Abstands um die Zugriffs-Steuereinheit-BLE-Schnittstelle in der Reichweite der Beacon-Kommunikation befindet, die typischerweise in der Größenordnung von einigen 10m beträgt, und gegebenenfalls je nach gewünschten Anwendungsszenarien von dem mit der Umsetzung der Erfindung betrauten Entwickler auch noch zu geringeren Werten hin reduziert werden kann.

Ein Vorteil der Nutzung von Beacon-Kommunikation, das heißt: einer Nutzung insbesondere von Protokollen, die auf dem Versenden von BLE-Beacons beruhen, besteht darin, dass sie - nicht zuletzt aufgrund der vorgegebenen vergleichsweise geringen Größe der einzelnen Beacons - mit einem vergleichsweise geringen Energieumsatz beziehungsweise Strombedarf einhergehen, sodass eine gewisse Langlebigkeit des ID-Gebers erwartet werden darf, bevor beispielsweise ein Batteriewechsel erforderlich wird.

Eine Ausführung der Durchführung der BLE-Kommunikations-Sequenz des Schritts C) kann in einer Variante umfassen, dass, nachdem der Beacon-Kurzidentifikator als eine bekannte ID-Geber-BLE-Schnittstelle kennzeichnender Beacon-Kurzidentifikator erkannt worden ist, die Zugriffs-Steuereinheit-BLE-Schnittstelle eine Datenbereitstellungsaufforderung aussendet. Beispielsweise kann es sich bei dieser Datenbereitstellungsaufforderung um eine *Scan-Request*-Abfrage handeln, das heißt: um ein *Scan Request* entsprechend dem Bluetooth^{®}-Protokoll, beispielsweise gemäß Bluetooth^{®}-Core-Specification-Version 5.0, 5.1 oder 5.2 vorgesehenen *Scan Request.*

Ferner kann diese Variante des Verfahrens vorsehen, dass nach Erhalt der Datenbereitstellungsaufforderung durch die ID-Geber-BLE-Schnittstelle die ID-Geber-BLE-Schnittstelle das Durchführen der BLE-Kommunikation in der erfindungsgemäßen und oben beschriebenen Weise durchführt. Das bedeutet, dass als Reaktion auf die Datenbereitstellungsaufforderung, beispielsweise als Scan-Request-Abfrage ausgebildet, das Bereitstellen der Authentifizierungsdaten von dem ID-Geber zu der Zugriffs-Steuereinheit erfolgt.

Das in Schritt A) ausgesendete Beacon ist insbesondere ein Beacon-Datenpaket, das von der ID-Geber-BLE-Schnittstelle ausgesendet wird. Das Beacon-Datenpaket ist beispielsweise ausgebildet als iBeacon^{®}-Datenpaket oder als AltBeacon-Datenpaket oder als URIBeacon-Datenpaket oder als Eddystone^{®}-Beacon-Datenpaket.

In einer vorteilhaften Ausführungsform kann vorgesehen sein, dass das Durchführen der BLE-Kommunikations-Sequenz zunächst den Schritt C1) umfasst, in welchem die Datenbereitstellungsaufforderung von der Zugriffs-Steuereinheit-BLE-Schnittstelle ausgehend versandt wird, und dass nach dem Empfang durch die ID-Geber-BLE-Schnittstelle der ID-Geber, beispielsweise veranlasst durch einen in dem ID-Geber vorhandenen und mit der ID-Geber-BLE-Schnittstelle gekoppelten Mikrocontroller, als Schritt C2) das Erfassen Sensordaten mittels eines ebenfalls in dem ID-Geber vorhandenen Sensors veranlasst und hiernach zumindest einen Teil der Sensordaten oder aus den Sensordaten oder aus einem Teil der Sensordaten abgeleiteten Informationen als Antwortdaten von der ID-Geber-BLE-Schnittstelle aus versendet. Das Versenden der Sensordaten kann dabei insbesondere als Versenden innerhalb eines Beacon-Datenpakets ausgebildet sein.

C3) Die Antwortdaten werden, nachdem die Zugriffs-Steuereinheit-BLE-Schnittstelle sie empfangen hat, durch die Zugriffs-Steuereinheit, beispielsweise mit einem in der Zugriffs-Steuereinheit enthaltenen und mit der Zugriffs-Steuereinheit-BLE-Schnittstelle gekoppelten Mikrocontroller, auf ein Validierungskriterium hin geprüft.

Dabei kann vorgesehen sein, dass, nachdem das Prüfen der Antwortdaten auf das vorgegebene Validierungskriterium ein positives Ergebnis ausgibt, das Aussenden einer Verbindungsaufforderung erfolgt. Die Verbindungsaufforderung kann beispielsweise als ein *Scan-Request* im Sinne der Bluetooth^{®}-Core-Spezifikation ausgebildet sein.

Hieran anschließend kann das Initiieren und Durchführen einer BLE-Kommunikation zwischen ID-Geber-BLE-Schnittstelle und Zugriffs-Steuereinheit-BLE-Schnittstelle veranlasst werden, in deren Rahmen das Übermitteln von Authentifizierungsdaten von dem ID-Geber zu der Zugriffs-Steuereinheit erfolgt. Dies kann insbesondere im Rahmen einer regulären BLE-Verbindung (*BLE-Connection*) erfolgen.

Mit der beschriebenen Verfahrensführung wird eine Vorgehensweise vorgestellt, in deren Zuge die Zugriffs-Steuereinheit-BLE-Schnittstelle veranlassen kann, dass der ID-Geber Sensor-Daten erfasst, woraufhin diese Sensor-Daten zu der Zugriffs-Steuereinheit übermittelt werden, und die Sensordaten infolge des Prüfens auf ein Validierungskriterium dazu beitragen, dass die fortgesetzte Kommunikation und damit auch die Authentifizierung des ID-Gebers von bestimmten Nutzungsszenarien abhängig gemacht werden kann. Die Nutzungsszenarien, die eine Authentifizierung ermöglichen sollen und die für diese geeigneten Validierungskriterien zur Validierung der Sensordaten sind dabei insbesondere empirisch zu finden. Sobald ein gegebenes Validierungskriterium als zusätzliche Voraussetzung für eine Fortsetzung des Authentifizierungsprozesses von den Sensordaten erfüllt sein muss, wird durch das zusätzliche Erfordernis potenziell die Sicherheit der Authentifizierung erhöht, da bei geeigneter Wahl von Sensor-Daten das Verfahren derart eingestellt werden kann, dass die Wahrscheinlichkeit von Fehlauthentifizierungen verringert werden kann. Welche Sensor-Daten dabei als geeignet angesehen werden können und welche Validierungskriterien diese unterzogen werden sollen, ist beispielsweise empirisch zu ermitteln. Ein weiterer Vorteil dieser Weiterbildung des Verfahrens besteht darin, dass zumindest bis einschließlich Schritt C3 bevorzugt die Datenübermittlung im Rahmen von BLE-Beacons erfolgt, wodurch in vorteilhafter Weise der Energieumsatz bei Durchführung des Verfahrens vergleichsweise moderat bleibt.

Die Datenbereitstellungsaufforderung kann, wie oben bereits angedeutet, eine *Scan-Request*-Abfrage sein.

Die Antwortdaten können als Beacon-Antwortdaten ausgeführt sein oder in Beacon-Antwortdaten enthalten sein.

Die Antwortdaten können ein *Scan-Response-*Paket sein oder ein solches umfassen.

Besonders bevorzugt ist, dass der Sensor ein Beschleunigungs-Sensor ist, oder der Sensor ein Gyro-Sensor ist, oder der Sensor ein Beschleunigungs- und Gyro-Sensor ist. Die erhaltenen Antwortdaten sind entsprechend dem Sensor Beschleunigungsdaten, oder Gyro-Daten, oder Beschleunigungs- und Gyro-Daten.

Das Prüfen der Antwortdaten umfasst bevorzugt, das RSSI-Werte der Antwortdaten mit hinterlegten Referenzwerten verglichen werden, und/oder eine absolvierte Bewegung der Sensor-Daten während eines festgelegten Zeitraums mit hinterlegten Referenzwerten verglichen werden.

Beispielsweise kann vorgesehen sein, dass das Prüfen der Antwortdaten eine absolvierte Bewegung von Gyro-Daten eines Gyro-Sensors während eines festgelegten Zeitraums ist und das Validierungskriterium darin besteht, dass die Beschleunigung in jeder der drei betrachteten Koordinaten unterhalb eines vorgegeben Werts ist. Alternativ oder zusätzlich kann das Validierungskriterium umfassen, dass der RSSI-Wert der Antwortdaten unterhalb einer vorgegebenen Schwelle ist. Mit einer solchen Konfiguration würde beispielsweise die Validierung bei empirisch entsprechend gefundenen Werten eine zusätzliche Sicherheit bieten, dass der Bediener sich tatsächlich innerhalb eines vorgegebenen Abstands von der Zugriffs-Steuereinheit befindet und er den Wunsch nach Zugriff hat. Für den Fall, dass der Bediener beispielsweise an der Zugriffs-Steuereinheit vorbeigeht und nicht an dieser stehen bleibt, würde beispielsweise selbst bei sehr geringem Abstand des Bedieners von der Zugriffs-Steuereinheit aufgrund der Beschleunigungsdaten, sofern diese geeignet gewählt sind, erkannt werden können, dass der Bediener zwar anwesend ist, er aber mit gewisser Wahrscheinlichkeit keinen Zugriffswunsch hat. Dadurch, dass die Validierung der Sensordaten dem Austausch der Authentifizierungsdaten vorgeschaltet ist, und die Sensordaten wiederum in kleinem Beacon-Paket übersendet werden, wird der erforderliche Energieumsatz für die Durchführung des Verfahrens reduziert, was insbesondere auf der Seite des portablen und vergleichsweise kleinen ID-Gebers eine hohe Relevanz hat im Sinne von möglichst langen Intervallen zwischen zwei Batteriewechseln. Dadurch, dass die Information aus Sensor-Daten mit einer solchen aus Authentifizierungsdaten kombiniert wird, wird zudem die Zutrittssicherheit erhöht.

Die Verbindungsaufforderung kann beispielsweise eine *Scan-Request*-Abfrage sein.

Zum Initiieren der BLE-Kommunikation kann vorgesehen sein, dass von der ID-Geber-BLE-Schnittstelle ein BLE-Advertising ausgesandt wird. Das bedeutet, dass zunächst dem ID-Geber mit der Verbindungsaufforderung, beispielsweise als *Scan Request* ausgebildet, signalisiert wird, dass die Zugriffs-Steuereinheit eine Absicht zur Authentifizierung unter den vorgegebenen Kriterien mit gewisser Wahrscheinlichkeit als vorliegend ansieht. Die ID-Geber-BLE-Schnittstelle reagiert hierauf beispielsweise mit einem BLE-Advertising, wodurch sie das Eintreten in eine reguläre BLE-Verbindung zwischen ID-Geber-BLE-Schnittstelle und Zugriffs-Steuereinheit-BLE-Schnittstelle herbeiführt.

In einer Weiterbildung kann vorgesehen sein, dass nach dem Initiieren der BLE-Kommunikation, entweder in jedem Fall oder für den Fall, dass zusätzliche Voraussetzungen vorliegen, ergänzend ein UWB-Ranging zwischen einer Steuereinheit-UWB-Schnittstelle und einer im ID-Geber vorhandenen ID-Geber-UWB-Schnittstelle durchgeführt wird zum Plausibilisieren eines Abstands des ID-Gebers von der physischen Einheit. Dadurch, dass UWB-Ranging eine sehr gute Genauigkeit in der Abstandsermittlung aufweist, erlaubt dieses in vielen Fällen eine genauere Bestimmung des Abstands eines Bedieners, der den ID-Geber bei sich trägt, zu der physischen Einheit; die auf Basis der BLE-Kommunikation erhaltenen Daten können somit auf Basis eines mittels UWB-Rangings ermittelten Abstand genauer validiert werden; beispielsweise kann vorgesehen sein, dass vor einem Abschluss des Authentifizierens das Kriterium abgeprüft wird, ob der Bediener sich innerhalb eines vorgehebenen Abstands und/oder außerhalb eines vorgegebenen Abstands um eine UWB-Schnittstelle der physischen Einheit, ermittelt mittels UWB-Ranging, befindet, und dass das Authentifizieren nur dann abgeschlossen wird, wenn dieses Kriterium als zusätzliches Kriterium erfüllt ist.

Eingangs wurde erwähnt, dass das Verfahren initiiert wird, indem ein Beacon-Kurzidentifikator ausgegeben wird. In einer vorteilhaften Ausführungsform kann vorgesehen sein, dass dieses Aussenden des Beacon-Kurzindentifikators erst dann ausgelöst wird, wenn eine Bewegung des ID-Gebers mittels eines in dem ID-Geber angeordneten Bewegungssensors oder Beschleunigungssensors oder Gyro-Sensors oder Beschleunigungs- und Gyrosensors erkannt worden ist. Das bedeutet, dass in einem Fall, in dem ein ID-Geber über einen längeren Zeitraum unbewegt bleibt, keinerlei Funkkommunikation vom ID-Geber weg erfolgt (also ein Schlafzustand vorliegt), sondern dass erst mit dem Erkennen einer Bewegung mit einem der oben genannten Sensoren ein Signal an einen Mikrocontroller im ID-Geber ausgegeben wird, worauf hin dieses das Aussenden des Beacon veranlasst, beispielsweise einmalig oder für einen vorgegebenen Zeitraum in regelmäßigen Intervallen wiederholt mit nachfolgender erneuter Einnnahme des Schlafzustands, sobald der vorgegebene Zeitraum verstrichen ist. Auf diese Weise kann der Strombedarf des ID-Gebers weiter reduziert werden.

Ein weiterer Gedanke der Erfindung betrifft einen ID-Geber zur Authentifikation an einer zu steuernden physischen Einheit. Der ID-Geber weist hierzu mindestens auf:
eine ID-Geber-BLE-Schnittstelle mit einer Antenne;
einen mit der ID-Geber-BLE-Schnittstelle gekoppelten Mikrocontroller;
bevorzugt einen mit dem Mikrocontroller gekoppelten Sensor, ausgebildet als
   a) Beschleunigungssensor, oder
   b) Gyro-Sensor, oder
   c) Beschleunigungs- und Gyrosensor;
bevorzugt zusätzlich eine mit dem Mikrocontroller gekoppelte UWB-Schnittstelle,
wobei der Mikrocontroller ausgebildet ist, die Schritte des ID-Gebers in einem Verfahren nach einem der Ansprüche 1-12 durchzuführen.

Besonders bevorzugt ist, dass die physische Einheit ein Fahrzeug ist, bevorzugt ein Landfahrzeug, besonders bevorzugt ein Personenkraftwagen.

Ein weiterer Gedanke der Erfindung ist ein System aus ID-Geber und physischer Einheit. Bei dem ID-Geber handelt es sich um einen ID-Geber in der zuvor beschriebenen Weise.

Die physische Einheit weist eine Zugriffs-Steuereinheit auf, wobei die Zugriffs-Steuereinheit zumindest aufweist:
- eine Zugriffs-Steuereinheit-BLE-Schnittstelle mit einer Antenne,
- eine mit der Zugriffs-Steuereinheit-BLE-Schnittstelle gekoppelte Steuereinrichtung, die bevorzugt als Mikrocontroller ausgebildet ist.

Die Steuereinrichtung der Zugriffs-Steuereinheit ist ausgebildet ist, die Schritte der Zugriffs-Steuereinheit in einem erfindungsgemäßen Verfahren oder seiner Weiterbildungen durchzuführen.

Der ID-Geber und die Zugriffs-Steuereinheit sind derart aufeinander angepasst eingerichtet, dass der ID-Geber zur Authentifizierung an der Zugriffs-Steuereinheit mit auf einem Speichermittel des ID-Gebers abgelegten Authentifizierungsdaten vorbereitet ist, wobei die Authentizität der Authentifizierungsdaten durch die Steuereinrichtung der Zugriffs-Steuereinheit feststellbar ist. Ein Beispiel für die Umsetzung dieser Authentifizierung des ID-Gebers an der Zugriffs-Steuereinheit ist die Ausbildung der Authentifizierungsdaten als öffentlicher Schlüssel eines asymmetrischen Schlüsselpaars, wobei der private Schlüssel zur Feststellung der Authentizität in einem Speichermittel der Steuereinrichtung der Zugriffs-Steuereinheit oder in einem mit der Steuereinrichtung der Zugriffs-Steuereinheit gekoppelten Speichermittel abgelegt ist, und die Steuereinrichtung mit den erforderlichen kryptographischen Programmen zur Authentifizierung des vom ID-Geber erhaltenen Schlüssels vorbereitet ist. Selbstverständlich können auch andere dem Fachmann bekannte Methoden der Authentifizierung implementiert werden.

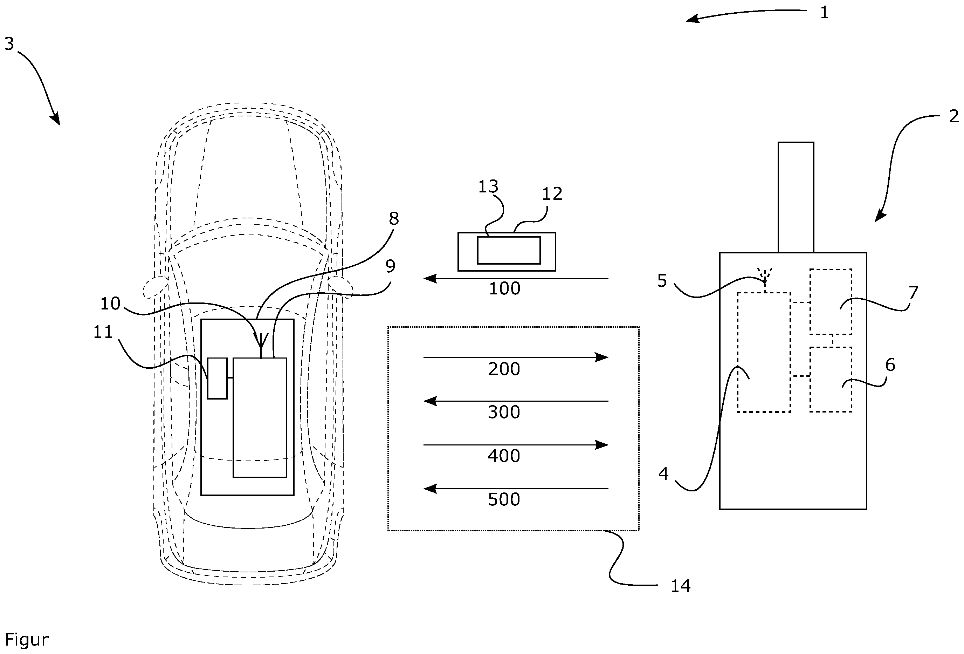

Weitere Einzelheiten, Merkmale und Vorteile des erfindungsgemäßen Verfahrens ergeben sich aus der nachfolgenden Beschreibung im Zusammenhang mit der Figur, in der beispielhaft ein Ausführungsbeispiel der Erfindung dargestellt ist.

Es versteht sich, dass die vorstehend genannten wie auch nachfolgend genannten Merkmale nicht nur in der jeweils angegeben Kombination, sondern auch in anderen Kombinationen oder in Alleinstellung verwendbar sind.

Es zeigt die Figur: eine schematische Darstellung eines Systems aus ID-Geber und physischer Einheit mit Zugriffs-Steuereinheit sowie mit einem Ablauf von Funkkommunikation zwischen dem ID-Geber und der Zugriffs-Steuereinheit der physischen Einheit im Zuge des Authentifizierens des ID-Gebers durch die Zugriffs-Steuereinheit.

Es ist ein System 1 aus ID-Geber 2 und als Personenkraftfahrzeug ausgebildeter physischer Einheit 3 gezeigt.

Der ID-Geber 2 weist eine ID-Geber-BLE-Schnittstelle 4 mit einer Antenne 5 auf. In dem ID-Geber 2 ist ein Mikrocontroller 6 vorhanden, der mit der ID-Geber-BLE-Schnittstelle 4 gekoppelt ist. Weiterhin weist der ID-Geber 2 einen Beschleunigungs- und Gyrosensor 7 auf, der ebenfalls mit dem Mikrocontroller 6 gekoppelt ist.

Der Mikrocontroller ist programmiert, um die ID-Geberseitigen Aktionen im Zuge einer Authentifizierung des ID-Gebers 2 am Fahrzeug 3 zu veranlassen.

Die als Personenkraftfahrzeug ausgebildete physische Einheit 3 umfasst eine Zugriffs-Steuereinheit 8. Die Zugriffs-Steuereinheit 8 weist zumindest die nachfolgenden Komponenten auf:
- eine Zugriffs-Steuereinheit-BLE-Schnittstelle 9 mit einer Antenne 10,
- eine mit der Zugriffs-Steuereinheit-BLE-Schnittstelle 9 gekoppelte Steuereinrichtung 11, die bevorzugt als Mikrocontroller ausgebildet ist.

Die Steuereinrichtung ist programmiert, die Schritte der Zugriffs-Steuereinheit 8 in der Kommunikation mit dem ID-Geber 2 durchzuführen.

Ein Authentifizieren des mobilen ID-Gebers an dem Fahrzeug ist in der Figur schematisch dargestellt:
Der ID-Geber sendet in gewissen Abständen, beispielsweise von mehreren 10 Mikrosekunden, BLE-Beacons 12 aus, die mit einem Beacon-Kurzidentifikator 13 versehen sind, der die ID-Geber-BLE-Schnittstelle kennzeichnet (Schritt 100);
B) nachdem die Zugriffs-Steuereinheit-BLE-Schnittstelle 9 das Beacon 12 empfangen hat, prüft die Zugriffs-Steuereinheit 8, beispielsweise mit der Steuereinrichtung 11, den Beacon-Kurzidentifikator 13 daraufhin, ob das Beacon von demjenigen ID-Geber 2 ausgesendet worden ist, welcher dem Fahrzeug 3 zugeordnet ist;
C) nachdem die Zugriffs-Steuereinheit 8 festgestellt hat, dass der Beacon-Kurzidentifikator von dem zugeordneten ID-Geber stammt oder zu stammen scheint, startet die Zugriffs-Steuereinheit 8 eine BLE-Kommunikations-Sequenz 14 zwischen Zugriffs-Steuereinheit-BLE-Schnittstelle 9 und ID-Geber-BLE-Schnittstelle 4:
   Zunächst wird von der Zugriffs-Steuereinheit-BLE-Schnittstelle 9 ausgehend eine als *Scan-Request*-Abfrage ausgebildete Datenbereitstellungsaufforderung versandt (Schritt 200);
   die ID-Geber-BLE-Schnittstelle 4 empfängt die Datenbereitstellungsaufforderung, und der Mikrocontroller 6 interpretiert diese als Aufforderung, für einen gewissen Zeitraum, beispielsweise von einigen 100 Millisekunden, Sensordaten des Beschleunigungs- und Gyrosensors 7 aufzuzeichnen und diese mit der ID-Geber-BLE-Schnittstelle 4 auszusenden (Schritt 300);
   die Zugriffs-Steuereinheit-BLE-Schnittstelle 9 empfängt die Daten, diese werden mit dem Mikrocontroller 11 der Zugriffs-Steuereinheit auf wenigstens ein Validierungskriterium hin geprüft, beispielsweise dahin, ob die Bewegung des ID-Gebers unterhalb einer gewissen Strecke in dem gewissen Zeitraum stattgefunden hat;
   wenn das Prüfen der Antwortdaten auf das Validierungskriterium ein positives Ergebnis ausgibt, erfolgt ein *Scan Request* mittels der Zugriffs-Steuereinheit-BLE-Schnittstelle (Schritt 400), welche diese mit einem BLE-*Advertise*-Signal beantwortet (Schritt 500).

Es wird BLE-Verbindung aufgebaut, also eine *BLE Connection,* woraufhin schließlich in dem Fachmann bekannter Weise eine in bidirektionaler Kommunikation das Authentifizieren des ID-Gebers durch die Zugriffs-Steuereinheit anhand von Authentifizierungsdaten erfolgt, die in der BLE-Kommunikations-Sequenz von der ID-Geber-BLE-Schnittstelle zu der Zugriffs-Steuereinheit-BLE-Schnittstelle übermittelt worden sind.

Mit der beschriebenen Vorgehensweise wird erreicht, dass einem Authentifizieren des ID-Gebers im Rahmen einer BLE-Kommunikation und der nachfolgenden Prüfung der übermittelten Daten eine Vorabkommunikation mit Übermittlung von relevanten Daten und einer Vorab-Plausibilisierung auf Basis einer BLE-Beacon-Übermittlung erfolgt. Die Übermittlung der BLE-Beacons ist insbesondere aufgrund der nur geringen Datenpaketgröße mit moderatem Strombedarf möglich, sodass in besonders vorteilhafter Weise eine vergleichsweise lange Lebensdauer der in dem ID-Geber vorhandenen Batterie erhalten wird bei gleichzeitig sehr guter Sicherheit des Verfahrens aufgrund der mehrstufigen Validierung und Authentifizierung.

## Patentansprüche

1. Verfahren zum Authentifizieren eines mobilen ID-Gebers (2), der eine ID-Geber-BLE-Schnittstelle (4) aufweist, an einer Zugriffs-Steuereinheit (8) einer physischen Einheit (3), wobei die Zugriffs-Steuereinheit (8) den Zugriff auf die physische Einheit (3) sperren und freigeben kann, und wobei die Zugriffs-Steuereinheit (8) eine Zugriffs-Steuereinheit-BLE-Schnittstelle (9) aufweist,
wobei das Verfahren die nachfolgend genannten Schritte umfasst:
A) Aussenden eines Beacons (12) mit einem Beacon-Kurzidentifikator (13), der die ID-Geber-BLE-Schnittstelle (4) kennzeichnet, von der ID-Geber-BLE-Schnittstelle (4) aus;
B) nachdem die Zugriffs-Steuereinheit-BLE-Schnittstelle (9) das Beacon (12) empfangen hat, Prüfen des Beacon-Kurzidentifikators (13) durch die Zugriffs-Steuereinheit (8);
C) nachdem das Prüfen des Beacon-Kurzidentifikators (13) ergeben hat, dass der Beacon-Kurzidentifikator (13) eine bekannte ID-Geber-BLE-Schnittstelle (4) kennzeichnet, von der Zugriffs-Steuereinheit-BLE-Schnittstelle (9) ausgehend: Durchführen einer BLE-Kommunikations-Sequenz (14) zwischen Zugriffs-Steuereinheit-BLE-Schnittstelle (9) und ID-Geber-BLE-Schnittstelle (4);
D) Authentifizieren des ID-Gebers (2) durch die Zugriffs-Steuereinheit (8) anhand von Authentifizierungsdaten, die in der BLE-Kommunikations-Sequenz (14) von der ID-Geber-BLE-Schnittstelle (4) zu der Zugriffs-Steuereinheit-BLE-Schnittstelle (9) übermittelt worden sind.

2. Verfahren nach Anspruch 1, **dadurch gekennzeichnet, dass** das Durchführen der BLE-Kommunikations-Sequenz (14) in Schritt C) die nachfolgenden Schritte umfasst:
von der Zugriffs-Steuereinheit-BLE-Schnittstelle (9) ausgehend: Aussenden einer Datenbereitstellungsaufforderung;
nachdem die ID-Geber-BLE-Schnittstelle (4) die Datenbereitstellungsaufforderung erhalten hat: Initiieren und Durchführen einer BLE-Kommunikation zwischen ID-Geber-BLE-Schnittstelle (4) und Zugriffs-Steuereinheit-BLE-Schnittstelle (9) für das Übermitteln von Authentifizierungsdaten von dem ID-Geber zu der Zugriffs-Steuereinheit (8).

3. Verfahren nach einem der vorhergehenden Ansprüche, **dadurch gekennzeichnet, dass** das Durchführen der BLE-Kommunikations-Sequenz (14) in Schritt C) die nachfolgenden Schritte umfasst:
C1) von der Zugriffs-Steuereinheit-BLE-Schnittstelle (9) ausgehend: Aussenden einer Datenbereitstellungsaufforderung;
C2) nachdem die ID-Geber-BLE-Schnittstelle (4) die Datenbereitstellungsaufforderung empfangen hat, Erfassen von Sensordaten eines in dem ID-Geber (2) vorhandenen Sensors (7) und Übermitteln zumindest eines Teils der Sensordaten oder aus diesen abgeleiteten Informationen als Antwortdaten von der ID-Geber-BLE-Schnittstelle (4) aus;
C3) nachdem die Zugriffs-Steuereinheit-BLE-Schnittstelle (9) die Antwortdaten empfangen hat, Prüfen der Antwortdaten durch die Zugriffs-Steuereinheit auf wenigstens ein Validierungskriterium;
C4) wenn das Prüfen der Antwortdaten ein positives Ergebnis ausgibt: Aussenden einer Verbindungsaufforderung;
C5) nachdem die ID-Geber-BLE-Schnittstelle die Verbindungsaufforderung erhalten hat: Initiieren und Durchführen einer BLE-Kommunikation zwischen ID-Geber-BLE-Schnittstelle (4) und Zugriffs-Steuereinheit-BLE-Schnittstelle (9) für das Übermitteln von Authentifizierungsdaten von dem ID-Geber zu der Zugriffs-Steuereinheit.

4. Verfahren nach Anspruch 3, **dadurch gekennzeichnet, dass** die Datenbereitstellungsaufforderung eine *Scan-Request*-Abfrage ist.

5. Verfahren nach einem der Ansprüche 3 oder 4, **dadurch gekennzeichnet, dass** die Antwortdaten als Beacon-Antwortdaten ausgeführt sind oder in Beacon-Antwortdaten enthalten sind.

6. Verfahren nach Anspruch 5, **dadurch gekennzeichnet, dass** die Antwortdaten ein *Scan-Response*-Paket ist oder umfasst.

7. Verfahren nach einem der Ansprüche 3 bis 6, **dadurch gekennzeichnet, dass**
der Sensor (7) ein Beschleunigungssensor ist und die Antwortdaten Beschleunigungsdaten sind, oder
der Sensor (7) ein Gyro-Sensor ist und die Antwortdaten Gyro-Daten sind, oder
der Sensor (7) ein Beschleunigungs- und Gyrosensor ist und die Antwortdaten Beschleunigungs- und Gyro-Daten sind.

8. Verfahren nach einem der Ansprüche 3 bis 7, **dadurch gekennzeichnet, dass** das Prüfen der Antwortdaten umfasst, dass
- RSSI-Werte der Antwortdaten mit hinterlegten Referenzwerten verglichen werden, und/oder
- eine absolvierte Bewegung der Sensordaten während eines festgelegten Zeitraums mit hinterlegten Referenzwerten verglichen werden.

9. Verfahren nach einem der Ansprüche 3 bis 8, **dadurch gekennzeichnet, dass** die Verbindungsaufforderung eine *Scan-Request*-Abfrage ist.

10. Verfahren nach einem der Ansprüche 2 bis 9, **dadurch gekennzeichnet, dass** zum Initiieren der BLE-Kommunikation von der ID-Geber-BLE-Schnittstelle (4) ein BLE *Advertising* ausgesandt wird.

11. Verfahren nach einem der Ansprüche 2 bis 10, **dadurch gekennzeichnet, dass** nach dem Initiieren der BLE-Kommunikation ergänzend ein UWB-Ranging zwischen einer Steuereinheit-UWB-Schnittstelle und einer ID-Geber-UWB-Schnittstelle durchgeführt wird zum Plausibilisieren eines Abstands des ID-Gebers von der physischen Einheit.

12. Verfahren nach einem der vorhergehenden Ansprüche, **dadurch gekennzeichnet, dass** das Aussenden des Beacons (12) mit dem Beacon-Kurzidentifikator (13) ausgelöst wird durch das Erkennen einer Bewegung des ID-Gebers (2) mittels eines in dem ID-Geber angeordneten Bewegungssensors (7) oder Beschleunigungssensors (7) oder Gyro-Sensors (7) oder Beschleunigungs- und Gyrosensors (7).

13. ID-Geber (2) zur Authentifikation an einer Zugriffs-Steuereinheit (8) einer physischen Einheit (3), wobei der ID-Geber (2) zumindest aufweist:
- eine ID-Geber-BLE-Schnittstelle (4) mit einer Antenne (5) ;
- einen mit der ID-Geber-BLE-Schnittstelle (4) gekoppelten Mikrocontroller (6);
- bevorzugt einen mit dem Mikrocontroller (6) gekoppelten Sensor (7), ausgebildet als
a) Beschleunigungssensor, oder als
b) Gyro-Sensor, oder als
c) Beschleunigungs- und Gyrosensor;
- bevorzugt eine mit dem Mikrocontroller gekoppelte UWB-Schnittstelle,
wobei der Mikrocontroller (6) ausgebildet ist, die Schritte des ID-Gebers (2) in einem Verfahren nach einem der Ansprüche 1 bis 12 durchzuführen.

14. System (1) aus ID-Geber (2) und physischer Einheit (3),
wobei der ID-Geber (2) ein ID-Geber (2) nach Anspruch 13 ist, und
wobei die physische Einheit (3) eine Zugriffs-Steuereinheit (8) aufweist, wobei die Zugriffs-Steuereinheit (8) zumindest aufweist:
- eine Zugriffs-Steuereinheit-BLE-Schnittstelle (9) mit einer Antenne (10),
- eine mit der Zugriffs-Steuereinheit-BLE-Schnittstelle (9) gekoppelte Steuereinrichtung (11), bevorzugt als Mikrocontroller (11) ausgebildet,
wobei die Steuereinrichtung (11) ausgebildet ist, die Schritte der Zugriffs-Steuereinheit (8) in einem Verfahren nach einem der Ansprüche 1 bis 12 durchzuführen,
wobei der ID-Geber (2) und die Zugriffs-Steuereinheit (8) derart aufeinander angepasst eingerichtet sind, dass der ID-Geber (2) zur Authentifizierung an der Zugriffs-Steuereinheit (8) mit auf einem Speichermittel des ID-Gebers (2) abgelegten Authentifizierungsdaten vorbereitet ist, und deren Authentizität durch die Steuereinrichtung (11) der Zugriffs-Steuereinheit (8) feststellbar ist.

15. System (1) nach Anspruch 14, **dadurch gekennzeichnet, dass** die physische Einheit (3) ein Fahrzeug ist, bevorzugt ein Landfahrzeug, besonders bevorzugt ein Personenkraftwagen.
